(19) Europäisches Patentamt

European Patent Office

Office européen des brevets

(11) Veröffentlichungsnummer: **0 509 542 A1**

(12) **EUROPÄISCHE PATENTANMELDUNG**

(21) Anmeldenummer: **92106699.9**

(22) Anmeldetag: **17.04.92**

(51) Int. Cl.5: **B32B 5/18**

(30) Priorität: **17.04.91 DE 9104695 U**

(43) Veröffentlichungstag der Anmeldung:
**21.10.92 Patentblatt 92/43**

(84) Benannte Vertragsstaaten:
**AT BE CH DE FR GB IT LI NL**

(71) Anmelder: **Emrich, Dirk, Dipl.-Ing**
**Graf-Albert-Strasse 67**
**W-5277 Müllenbach(DE)**

(72) Erfinder: **Emrich, Dirk, Dipl.-Ing**
**Graf-Albert-Strasse 67**
**W-5277 Müllenbach(DE)**

(74) Vertreter: **Patentanwälte Wenzel & Kalkoff**
**Flasskuhle 6 Postfach 2448**
**W-5810 Witten(DE)**

(54) **Schichtmaterial.**

(57) Ein Schichtmaterial besteht aus einem Verstärkungsrücken zur Verbesserung der Handhabung und der Festigkeit und zum Schutz einer weiteren, dünneren Schicht der eigentlichen Nutzschicht. Der Verstärkungsrücken besteht aus einem geschäumten Polyethylen, Polyethylenterephthalat oder einem Polystrol, dessen Steifigkeit in etwa der von 30 bis 450 g Papier enspricht.

EP 0 509 542 A1

Rank Xerox (UK) Business Services

Die Erfindung betrifft ein Schichtmaterial, das aus einem Verstärkungsrücken zur Verbesserung der Handhabung und der Festigkeit sowie zum Schutz einer weiteren, dünneren Schicht besteht, die die eigentliche Nutzschicht ist.

Derartige Schichtmaterialien sind seit langem bekannt. Weit verbreitet ist z.B. eine Papier-Aluminiumverbundfolie, die in unterschiedlichster Weise verwendet wird. Neben der Verpackung von Suppen und Gewürzen werden damit Polyurethanplatten beschichtet, um die Wärmedämmung zu verbessern und gleichzeitig eine Feuchtigkeitssperre zu bilden. Andere Anwendungsfälle betreffen Trägerfolien oder Trägerbahnen für klebefähige Folien, Bänder oder Etikette, wobei dann das Träger- und Schutzmaterial ein siliconisiertes Papier ist, das unmittelbar vor dem Gebrauch von der Klebeseite abgezogen werden kann, ohne daß darunter die Klebefähigkeit leidet.

Die bekannten Schichtmaterialien sind in mehrerer Hinsicht nachteilig. Bereits bei der Herstellung kann es vorkommen, daß die zu kaschierende Papierbahn sogenannte Spannriegel aufweist, also Welligkeiten, die nicht mehr zurückgebildet werden können. Darüber hinaus ist die Recyclefähigkeit von chemisch behandeltem Papier schwierig, da zur Wiederverwendung das Papier aufgeschlossen werden muß, um wieder an die Fasern heranzukommen. Dabei sind weitere chemische Prozesse zur Behandlung oder Erfassung der Beschichtungen unerwünscht bzw. unmöglich.

Es ist daher Aufgabe der Erfindung, ein Schichtmaterial der eingangs genannten Art so zu verbessern, daß bei zumindest gleichen Eigenschaften günstigere Produktionsmöglichkeiten und eine bessere Recyclefähigkeit erlangt wird.

Zur Lösung dieser Aufgabe schlägt die Erfindung vor, daß der Verstärkungsrücken aus einem geschäumten Polyethylen, Polyethylenterephthalat oder einem Polystyrol besteht, dessen Steifigkeit in etwa der von 30 bis 450 g Papier entspricht.

Die Erfindung schlägt also vor, statt des üblicherweise benutzten Papiers für den Verstärkungsrücken ein in der Regel dickeres Material zu verwenden, nämlich ein geschäumtes PE, PET oder PS. Die Dicke des Materials ist in der Regel völlig ohne Belang, es kommt lediglich darauf an, daß dieselbe Steifigkeit vorhanden ist. Auf diese Weise können die herkömmlichen Verarbeitungsmaschinen eingesetzt werden, mit denen z.B. jetzt schon Etikette geklebt werden. Bei Verwendungen als Isoliermaterial wird die Isolationswirkung verbessert, weil in dem geschlossenporigen Schaum Lufteinschlüsse geringen Volumens enthalten sind; Luft ist bekanntlich ein ausgezeichneter Isolator.

Bevorzugte Dichten für den geschäumten Verstärkungsrücken liegen zwischen 100 und 700 kg/cbm, insbesondere zwischen 270 und 500 kg/cbm, wobei je nach eingestellter Härte zur Erzielung der gewünschten Steifigkeit die Dicke des geschäumten Verstärkungsrückens 0,05 bis 3 mm insbesondere 0,3 bis 0,5 mm beträgt. Selbstverständlich sind hier auch andere Werte erzielbar, wenn über die Porengröße und die Harte eine entsprechende Materialeinstellung gewählt wird. Unabhängig davon, ob der erfindungsgemäße Verstärkungsrücken mit einer Aluminiumschicht, aluminiumbedampfter Polyesterfolie bzw. Silicatfolie oder mit einer Silikonkaschierung versehen ist bzw. Silikon als anteilige Masse eingemischt ist, kann in jedem Fall eine leichtere Wiederverwendung und Aufbereitung stattfinden als bei einer Verwendung von Papier als Verstärkungsrücken. Das liegt daran, daß eine chemische Auflösung bzw. Behandlung stattfinden kann, bei der vorhandene Silikonanteile chemisch berücksichtigt werden können. Dasselbe gilt für die Trennung von Aluminium von den genannten Materialien, wobei das Aluminium oftmals inert bleibt.

Die Verbindung zwischen dem geschäumten Verstärkungsrücken und der Nutzschicht kann mit Hilfe üblicher Praktiken geschehen. Dazu gehört das Aufsprühen, Aufwalzen, Aufstreichen und Auflegen als Folie von Kleber, der dann in der Regel durch Erwärmung zur Haftung gebracht wird. Abweichend davon kann im Einzelfall z.B. eine Aluminiumschicht aufkaschiert oder im Vakuum aufgedampft werden, wobei eine letztere Schicht nicht porenfrei ist. Auch eine Silikonisierung kann mit Hilfe von Lösungsmitteln, lösungsmittelfrei, durch Vernetzen, mit Hilfe von Folien oder in sonstiger Weise vorgenommen werden. Das Einmischen von Silikonbestandteilen in die geschäumte Masse ist bereits erwähnt worden.

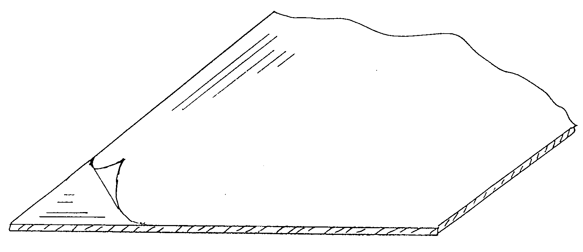

Auf der einzigen Figur ist im Schnitt ein Schichtmaterial gemäß der Erfindung wiedergegeben, das aus einem geschäumten Verstärkungsrücken aus Polyethylen von 0,4 mm besteht und einer darauf aufgebrachten Aluminiumfolie von ca. 30 µm Dicke. Die Folie ist, damit sie überhaupt erkennbar ist, an einer Seite aufgerichtet dargestellt. Die Verbindung geschieht mit einem für Polyethylen geeigneten Kleber, der im vorliegenden Fall aufgesprüht und durch Walzen erwärmt und angedrückt worden ist.

Ein derartiges Schichtmaterial dient als Ausgangsmaterial für die Herstellung einer aluminiumkaschierten Polyurethanplatte, die z.B. insgesamt 25 mm dick ist und für Isolierzwecke an Bauten eingesetzt wird. Dabei bildet das Aluminium eine Feuchtigkeitssperre; außerdem trägt das Reflektionsvermögen zur Wärmedämmung mit bei.

**Patentansprüche**

1. Schichtmaterial, bestehend aus einem Verstärkungsrücken zur Verbesserung der Handhabung und der Festigkeit sowie zum Schutz einer weiteren, dünneren Schicht, die die eigentliche Nutzschicht ist, dadurch **gekennzeichnet,** daß der Verstärkungsrücken aus einem geschäumten Polyethylen, Polyethylenterephtalat oder einem Polystyrol besteht, dessen Steifigkeit in etwa der von 30 bis 450 g - Papier entspricht.

2. Schichtmaterial nach Anspruch 1, dadurch **gekennzeichnet,** daß die Nutzschicht aus Aluminium oder aus aluminiumbedampfter Polyesterfolie bzw. Silicatfolie besteht.

3. Schichtmaterial nach Anspruch 1, dadurch **gekennzeichnet,** daß der Verstärkungsrücken einseitig silikonisiert ist, und daß die Nutzschicht eine klebefähige Folie, ein klebefähiges Band oder klebefähige Etiketten sind.

4. Schichtmaterial nach einem der vorhergehenden Ansprüche, dadurch **gekennzeichnet,** daß die Dichte des geschäumten Verstärkungsrückens 100 bis 700, insbesondere 270 bis 500 kg/cbm beträgt.

5. Schichtmaterial nach einem der vorhergehenden Ansprüche, dadurch **gekennzeichnet,** daß die Dicke des geschäumten Verstärkungsrückens 0,05 bis 3 , insbesondere 0,3 bis 0,5 mm beträgt.

6. Schichtmaterial nach Anspruch 2, dadurch **gekennzeichnet,** daß das Aluminium als Folie aufgeklebt oder kaschiert oder als Schicht aufgedampft ist.

7. Schichtmaterial nach Anspruch 3, dadurch **gekennzeichnet,** daß die Silikonisierung durch eine homogene Verteilung des Silikons in dem geschäumten Verstärkungsrücken gebildet ist.

European Patent Office

# EUROPEAN SEARCH REPORT

Application Number

EP    92 10 6699

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WORLD PATENTS INDEX LATEST Week 1484, Derwent Publications Ltd., London, GB; AN 84-085752 & JP-A-59 035 932 (DAINIPPON INK CHEM KK) 27 February 1984 * abstract * | 1,4-6 | B32B5/18 |
| X | DE-A-3 015 387 (METALL-PLASTIK GMBH & CO) * the whole document * | 1,2,4-6 | |
| X | US-A-4 180 427 (BERTSCH) * abstract; claims * | 1 | |
| A | FR-A-2 279 534 (SOLVAY & CIE) * claims 1-7 * | 1 | |
| | | | TECHNICAL FIELDS SEARCHED (Int. Cl.5 ) |
| | | | B32B |

The present search report has been drawn up for all claims

| Place of search | Date of completion of the search | Examiner |
|---|---|---|
| THE HAGUE | 19 JUNE 1992 | DE JONGE S.J.P. |

EPO FORM 1503 03.82 (P0401)